# EUROPEAN PATENT APPLICATION

(11) **EP 4 811 402 A1**
(43) Date of publication of application: **23.09.2026**
(21) Application number: 26166193.8
(22) Date of filing: 19.03.2026
(51) Int. Cl.: H01F 27/02, H01F 27/08, H02M 7/00, H01F 27/16

(54) **INDUCTOR COMPONENT FOR ELECTRIC VEHICLE**

(30) Priority: 21.03.2025 GB 202504182
(71) Applicant: Fortescue Zero Limited, Kidlington Oxfordshire OX5 1GB (GB)
(72) Inventor: DOWSON, Shaun, Kidlington, OX5 1GB (GB); MORSCHBACHER, Diego, Kidlington, OX5 1GB (GB)
(74) Representative: Boult Wade Tennant LLP

(57) **Abstract**

There is disclosed an inductor component for use in a circuit such as a switched-mode power converter of a power train of an electrically powered vehicle. In some aspects the inductor component comprises: a housing which comprises a base, at least one side wall extending from the base, and one or more cooling channels running within the at least one side wall, the one or more cooling channels being arranged for circulating a cooling fluid within the at least one sidewall so as to cool the inductor component during operation of the power converter; an inductor core disposed within the housing; and an inductor winding comprising a winding conductor wound onto the inductor core. In other aspects, a group of at least two coplanar and electrically in series inductor windings (130) is provided between each adjacent pair of at least three stacked cooling plates (110).

## Description

The invention relates to an inductor or an inductor component, for example such an inductor or inductor component for use in a switched-mode power converter, and in particular, but not exclusively, for such use in the power train of an electrically powered vehicle.

### Introduction

Electric vehicles of contemporary design and construction typically comprise a power train which couples motive electrical power between a battery and one or more electric motors. The electric motors may function both to propel the vehicle, and also to recover energy, during braking of the vehicle, for storage in the battery. The power train may comprise a plurality of different electrical components, but since the battery provides DC current and the motors will typically use AC, the power train will usually comprise one or more DC-AC inverters. These are typically constructed using MOSFETS, for example disposed in a bridge configuration, which are switched using suitable switching signals, with one or more power inductors and/or capacitors being provided to condition the output AC or DC.

Since the battery of an electric vehicle will typically provide current at a voltage which is considerably higher than that required by the inverters and/or motors, the power train will also usually comprise one or more DC-DC converters to convert between a higher battery voltage, say between a few hundred volts a few thousand volts, and a lower power train voltage, often around a few tens or few hundreds of volts. Such DC-DC converters are also typically implemented using MOSFETS or other electronic switching devices driven by suitable switching signals to provide switched-mode DC-DC converters, and typically also include at least one power inductor which is used to store energy as part of the power conversion process, for example in a buck-boost type configuration. Such power inductors may also or instead be used in a variety of other switched-mode power converters or for other purposes in the electric vehicle power train.

Since the motive electrical power delivered by an electric vehicle power train will typically be at least tens, and often at least hundreds of kW, and be subject to rapidly changing currents due to switching rates of typically 10's to 100's of kHz, they need to be designed carefully to prevent various type of failure, for example involving overheating and electrical insulation failure. It would be desirable to address these and other limitations of the related prior art.

### Summary of the invention

The invention provides inductor components or assemblies suitable for use in the power train of an electric vehicle, which remains reliable while carrying very high currents, for example of the order of 1000 A, and operating at high voltages for example in the multiple kV range. In particular, these inductor components are designed for use in switched-mode DC-DC and other forms of switched-mode power converters for the power trains of electric vehicles, which may typically operate at switching speeds of the order of a few to a few tens of kHz.

Embodiments of the inductor assembly comprises one or more inductor windings each of which is wound on a corresponding inductor core. In order to provide the high DC bias levels required in a switched-mode power converter, in some embodiments the inductor core may formed of multiple toroidal powder cores stacked together so as to increase the inductance, and these cores can be bonded together for stability.

Each inductor winding may comprise copper windings made from Litz wire, which reduces the AC losses due to skin effect which dominate in the target kilohertz frequency range. The Litz wire may be wrapped in Kapton tape for higher dielectric breakdown strength. Each inductor winding will be subject to high voltage AC in use, and in order to prevent insulation failure, the wound inductor may be dipped in insulating varnish and subjected to repeated vacuum and high pressure to ensure the varnish has penetrated into the Litz wire. The temperature of such an inductor winding or component may be monitored by an RTD temperature sensor such as a PRT-1000 sensor, which can be attached to the magnetic core or otherwise located at or near the inductor winding, and which provides an output signal with reduced voltage induced noise compared to when other types of temperature sensor such as NTC type thermistors are used.

Thermal management of the inductor component or assembly is important to prevent overheating, which can result in degradation of insulation and leading to failure of the component. In some embodiments this thermal management may be implemented by means of a coolant or cooling jacket, for example in form of a cast metallic sleeve which fits around the inductor core and winding, and has one or more cooling channels for passing liquid coolant around the outside of the winding and core. The one or more cooling channels could be in a spiral or helical form around the inductor winding. The wound inductor core may then be potted in a thermally conductive material which provides lower thermal resistance to transfer heat from the core and winding to the liquid cooling jacket. In other embodiments, the thermal management may be implemented by means of a stack of cooling plates each having one or more cooling channels for passing liquid coolant through the cooling plate. The inductor windings may then be disposed between these cooling plates and potted in a thermally conductive material which again provides lower thermal resistance to transfer heat from the core and winding to the liquid coolant.

Electrical current through each of one or more of the one or more inductor windings may be measured by an integrated closed loop Hall sensor which is mounted at an end of the inductor winding. Such a current sensor may have a printed circuit board assembly mounted on it to provide a local, isolated voltage supply, and to convert the current output by the Hall sensor into suitable analogue signal for example in the 5V range. This Hall sensor may be used to measure both AC and DC current, and can be locally interfaced to a measurement channel of a local gate driver used for sending switching signals to high power switches such as MOSFETS in a switched-mode power converter in which the inductor component is used. The local gate driver can also receive and forward the signal from the RTD sensor in the same way.

Control software, for example implemented in a power train electronic control unit, may use the above temperature and/or current measurements to adjust the operation point of a switched-mode power converter in which the inductor component is used, so that the temperatures of the one or more inductor windings are maintained at a sufficiently low level, and to avoid saturation of the one or more inductor cores which could cause failure in the switched-mode power converter, for example in failure of power MOSFETs used in the converter.

According to a first aspect, the invention provides an inductor component, for example for use in a switched-mode power converter of a power train of an electrically powered vehicle, or for use in other power converters or other situations, the inductor component comprising: a housing which comprises a base, at least one side wall extending from the base, and one or more cooling channels running within the at least one side wall, the one or more cooling channels being arranged for circulating a cooling fluid within the at least one sidewall so as to cool the inductor component during operation of the power converter or other circuit in which it is installed; an inductor core disposed within the housing; and an inductor winding comprising a winding conductor wound onto the inductor core.

The cooling channels may be provided in various ways, for example the at least one side wall may be provided as a metal casting comprising the one or more cooling channels within the casting, or by machining from one or more pieces of material (such as pieces of a metal) where the cooling channels are provided within the one or more machined pieces. Other ways of forming the side wall and associated cooling channels include by use of 3D printing or other rapid prototyping techniques.

The cooling channels may also be provided using various different geometries, for example being configured helically within the at least one side wall around the inductor core and winding.

The inductor core may comprise two or more toroidal or other shaped powder cores stacked together. In this way the cross sectional area of the core can be increased while using readily available core components.

The inductor winding may be electrically coupled to terminals provided externally to the housing for delivering current through the inductor. the inductor component may then also comprise a Hall effect current sensor unit also disposed outside of the housing and arranged to monitor the electrical current flowing through the inductor winding between the terminals.

A second aspect of the invention also provides an inductor component, for example for use in a switched-mode power converter of a power train of an electrically powered vehicle, or for use in other power converters or other situations. However, in this aspect the inductor component comprises: at least three stacked cooling plates, each cooling plate comprising one or more cooling channels running within the cooling plate for passing a cooling fluid through, or circulating a cooling fluid within, the cooling plate, so as to cool the inductor component during operation of the power converter; and plurality of inductor cores; and a group of coplanar, and electrically in series, inductor windings disposed between, and coplanar to, each adjacent pair of the stacked cooling plates, each inductor winding comprising a winding conductor wound onto a different one of the inductor cores. Optionally, the inductor component may also comprise at least one side wall disposed between each adjacent pair of the stacked cooling plates, so as to at least partly surround the corresponding group of coplanar inductor windings.

Each inductor winding in this second aspect may have a central axis, i.e. an axis of revolution, which extends approximately perpendicularly between the adjacent cooling plates, and/or with the outer circumference of each inductor winding lying approximately parallel to each of the adjacent cooling plates. In this context, each inductor winding may be a toroidal or approximately toroidal inductor winding, for example where each inductor core is a toroidal inductor core.

Using two or more inductor windings disposed physically side by side or adjacent to each other but in electrical series, between pairs of cooling plates in this way, increases the effective surface area of the series connected inductor windings, and reducing the distance from the cooling plates to the centres of the inductor windings and their respective cores. This provides for a reduced total mass for a given inductance and maximum current, and improved cooling efficiency with reduced complexity and cost of manufacture. The use of separate groups of series connected inductor windings between different pairs of plates also enables the inductor component to provide multiple separate inductors, for example for use in different electrical phases of a switched mode power converter.

Each inductor winding, for example in the form of a toroidal inductor winding wound onto a toroidal inductor core, may have an external diameter which is at least twice, or even at least three times the distance between the adjacent cooling plates, thereby providing a low profile group of side by side or adjacent indictor windings.

The cooling plates may be constructed and stacked in various ways, but typically each cooling plate may comprise an inlet and an outlet manifold or coupling at opposing ends of the inductor component for respective inlet and outlet of the cooling fluid into and out of the cooling plates.

Similar to the first aspect, an inductor component of this second aspect may comprise a pair of external terminals, but now such a pair of terminals for each group of inductor windings, so that each group can be used to provide a separately coupled inductance. The inductor component may then comprise at least one Hall effect current sensor unit arranged to detect the electrical current flowing through a corresponding at least one of the groups of inductor windings, that is between the external terminals for that group. For either the first or second aspect, the or each Hall effect current sensor unit may then also comprise an isolated power supply and/or provide closed loop operation to deliver an output signal representative of the monitored electrical current.

Each inductor winding of the first or second aspect may comprise from 10 to 40 turns of the winding conductor around the corresponding inductor core so as to provide an appropriate level of inductance in balance with current carrying capacity. To reduce electrical losses the winding conductor may comprise Litz wire and/or have a diameter of at least 7 mm for the second aspect in which multiple such inductor windings are provided in electrical series, or at least 10mm for the first aspect.

To help improve reliability under the typically high operating voltages and frequencies, the winding conductor(s) used in either aspect may be wrapped in partially overlapping turns of insulating tape before winding onto the respective inductor core, and the wrapped conductor wound on the core may be impregnated with an insulating varnish. To improve heat flow from the or each inductor winding to the cooling channels in the at least one side wall, or to the adjacent cooling plates, the space between the at least one side wall and the adjacent inductor winding(s) and/or inductor core(s) may be filled with a thermally conductive potting compound.

To monitor the temperature of the inductor component in either aspect, with reduced signal noise in the high magnetic and electric fields expected of typical operation, the inductor component may further comprise one or more resistance temperature detectors, RTDs, for monitoring the temperature of the or at least one of the inductor windings. The or each RTD may be located adjacent to the or at least one of the inductor winding(s) and/or the inductor core(s), for example being bonded to one of these. Optionally, and in order to achieve suitable sensitivity over the expected operating conditions, the RTD or each may be a platinum or more particularly a PT1000 sensor.

The invention also provides apparatus comprising a switched-mode power converter which comprises the inductor component of either of the above aspects, the apparatus further comprising a control system arranged to operate the power converter responsive to the temperature monitored using the at least one RTD and/or the electrical current monitored using the at least one Hall effect current sensor unit.

The described inductor component is intended for use in high power applications, so may have an external diameter of the housing, for example measured between opposing external faces of the at least one sidewall of at least 15 cm or at least 20 cm for the first aspect, and a total length of at least 40cm or at least 50 cm for the second aspect, and/or an internal volume of the housing within which the winding and core are housed has a volume of at least 1000 cm³ or at least 1500 cm³ or at least 3000 cm³. For similar reasons, the inductor component, or alternatively each group of inductor windings in the second aspect, may have an inductance of no more than 1000 µH or of no more than 500 µH and/or a current rating of at least 200 or at least 500 Amps.

The invention also provides a switched-mode power converter for use in a power train of an electrically powered vehicle, comprising the above inductor component, for example where the switched-mode power converter is DC-DC power converter optionally arranged to convert between a higher battery voltage and a lower voltage for input to a DC-AC inverter. In respect of the second aspect above, the power converter may have a plurality of phase subcircuits each operating at a different electrical phase, wherein each group of coplanar, and electrically in series, inductor windings forms part of a different one of the plurality phase subcircuits.

The invention also provides an electrically powered vehicle comprising: one or more an electric motors for propelling the vehicle; one or more batteries providing motive electrical power for the electric motors; and a power train coupling the motive electrical power between the batteries and the electric motors, wherein the power train comprises the switched mode power converter above (according to either of the first or second aspects) arranged to convert at least a portion of the motive electrical power.

The invention also provides methods of operating the described inductor component and switched mode power converter, for example a method of operating the described switched-mode power converter comprising operating the power converter responsive to the monitored temperature(s) and/or the detected electrical current(s).

The invention also provides methods of constructing the described inductor component, for example within or for use in a switched-mode power converter of a power train of an electrically powered vehicle, consistent with the first aspect above, the method comprising: providing a housing, the housing comprising a base, at least one side wall extending from the base, and one or more cooling channels running within the at least one side wall, the one or more cooling channels being arranged for circulating a cooling fluid within the at least one sidewall so as to cool the inductor component during operation of the power converter; providing an inductor core; winding a winding conductor onto the inductor core to form an inductor winding; and installing the inductor winding and inductor core into the housing.

The invention also provides a method of constructing an inductor component, for example within or for use within a switched-mode power converter of a power train of an electrically powered vehicle, consistent with the second aspect above, the method comprising: providing at least three stacked cooling plates, each cooling plate comprising one or more cooling channels running within the cooling plate for passing a cooling fluid through or circulating a cooling fluid within the cooling plate, so as to cool the inductor component during operation of the power converter; providing a plurality of inductor cores, and winding a winding conductor onto each said inductor core to form a respective inductor winding such that, for each of a plurality of groups of said inductor windings, the inductor windings of that group are connected in electrical series; and installing each group of inductor windings between a different adjacent pair of the stacked cooling plates. Each inductor winding may be approximately toroidal in form, or of some other form, for example in which an axis of revolution of the form extends approximately perpendicularly between the adjacent cooling plates, and an outside circumference of the form lies between and approximately parallel to each of the adjacent cooling plates.

Either method of constructing may further comprise wrapping partially overlapping turns of insulating tape onto the or each winding conductor, and then impregnating the wrapped winding conductor(s) with an electrically insulating varnish before installing the or each winding conductor and inductor core into the housing or between adjacent pairs of cooling plates.

Either method of constructing may also or instead comprise, following installing the or each winding conductor and inductor core into the housing or between adjacent cooling plates, potting the inductor winding and inductor core into the housing or between adjacent cooling plates with a thermally conductive potting compound. Either method of constructing may also comprise, before potting the inductor winding and inductor core with a thermally conductive potting compound, installing a resistance temperature detector, RTD, adjacent to the or at least one of the inductor windings and/or the inductor cores, such that that an electrical lead of the at least one RTD subsequently emerges from the potting compound for electrical connection to the RTD.

### Brief summary of the drawings

Embodiments of the invention will now be described, by way of example only, with reference to the drawings of which:
Figure 1 illustrates in schematic plan view an electric vehicle in which a power train between a battery and a drive motor includes a switched-mode power converter such as a DC-DC power converter;
Figure 2 shows in schematic form one example of an electrical circuit which may be used to implement the switched-mode power converter of figure 1;
Figure 3 provides an exploded engineering view of a first embodiment of an inductor component which may be used to implement the high power inductor of figure 2;
Figure 4 shows in cross section the inductor component of figure 3;
Figure 5 shows the in perspective solid view the inductor component of figures 4 and 5;
Figure 6 shows an exploded engineering view of a second embodiment of an inductor component which may be used to provide two or more high power inductors for use in one or more electrical circuits such as that of figure 2;
Figure 7 shows a plan view of the inductor component of figure 6;
Figure 8 shows the cross section A-A depicted in figure 7; and
Figure 9 shows in perspective solid view the inductor component of figures 6 to 8.

### Detailed description of embodiments

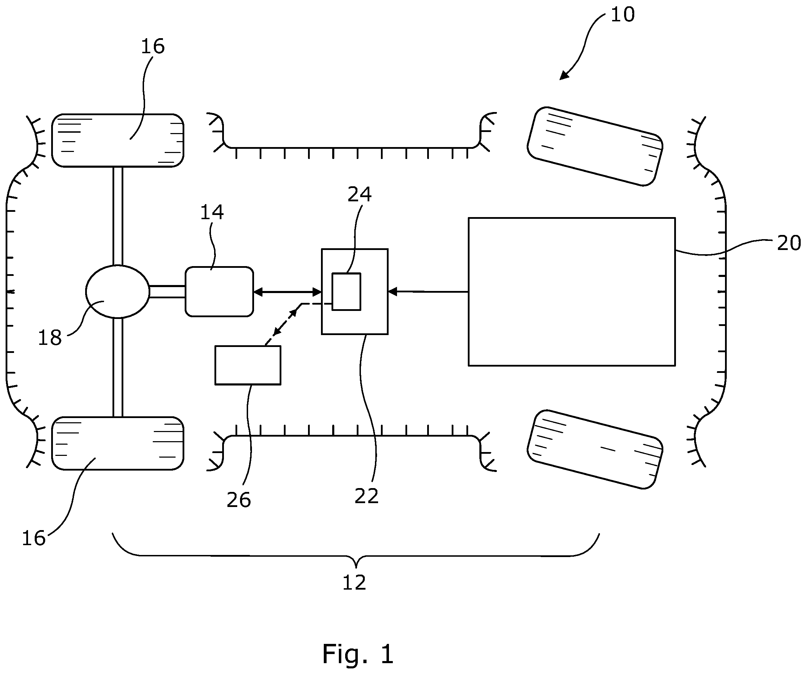

Figure 1 illustrates an electrically powered vehicle 10 schematically in plan view. The vehicle 10 comprises a power train 12 which includes one or more electric motors 14 for propelling the vehicle through driving wheels 16 or other drive elements of the vehicle, optionally via mechanical gearing 18, and one or more batteries 20 for providing motive electrical power for use by the motors 14. In order to condition the motive electrical power for delivery to the one or more motors 14 in the correct form, the power train 12 also comprises power electronics 22 which in turn comprises one or more switched mode power converters 24 such as one or more DC-DC switched mode power converters, DC-AC switched mode inverters, and/or other switched mode power converter elements. In particular, the power electronics 22 may comprise a DC-DC switched mode power converter arranged to convert electrical power between a voltage supplied by the battery 20 and a voltage required by the motor 14 or other parts of the power electronics or power train, and indeed also in the other direction should transfer of vehicle braking power from the motor to the battery be required.

Various electronic systems may be provided within, and optionally at least partly externally to the electric vehicle 10, in order to provide appropriate monitoring and/or control of the power train 12, for example a battery management system (not illustrated) and a power train electronic control unit 26. In order to provide effective control of the power electronics 22, and more particularly of the switched mode power converter 24, the switched mode power converter 24 may measure concurrent conditions of its operation such as one or more temperatures and one or more electrical voltages and/or currents, and pass these measurements to the power train electronic control unit 26 to provide more effective control of the power train and in particular of the switched mode power converter 24. For example, excessive temperature in one or more components of the power converter may indicate operational problems which need addressing for example by adjusting the switching signals delivered to the power converter 24, or even shutting down the power converter and perhaps also wider parts of the power train.

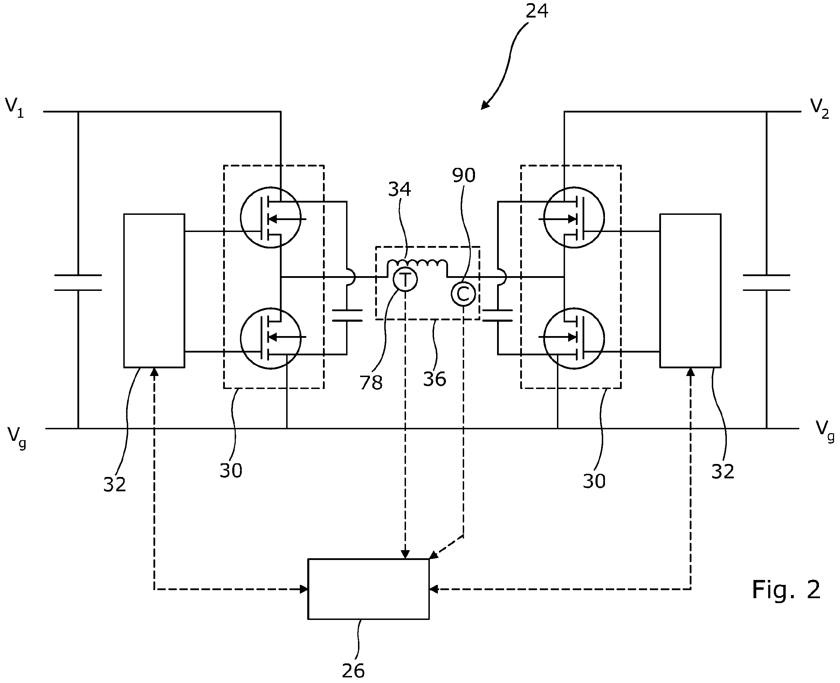

Figure 2 is a circuit diagram showing one example of how a subcircuit 25 of the switched mode power converter 24 may be implemented, in this case as a subcircuit of a DC-DC power converter to convert between first and second voltages ***V₁*** and ***V₂*** (with ***V_{g}*** representing a common ground voltage). Note that the circuit diagram is simplified and does not show all of the components which would typically be found in a real implementation. Circuits of this general type are well known in the prior art, and can take a variety of different forms.

This particular illustrated switched mode power converter subcircuit 25 uses two MOSFET pairs 30 each comprising two MOSFETS coupled directly together, each pair being driven by switching signals from a gate driving circuit 32 (which could be the same circuit for both pairs or two different driving circuits) under control of the power train electronic control unit 26. The power train electronic control unit 26 may also receive measurements from each of the MOSFET driving circuits 32 or from the MOSFET pairs themselves for example of temperature and current in each MOSFET pair. Each MOSFET pair may be packaged in a separate MOSFET module, or both pairs could be packaged in the same MOSFET module.

In this example, the subcircuit 25 operates in a buck/boost mode. An electrical link directly between the two MOSFETS in each pair is coupled to a respective end of an inductor 34 which is electrically coupled between the pairs, and given the large electrical currents and powers which need to be carried may be referred to as high power inductor 34. Carefully timed switching of the MOSFETs in the two pairs is used to cause the MOSFETs to supply energy to, and receive energy from the high power inductor 34, which in combination with other components in the circuit and especially the various capacitors, then causes electrical power to flow through the circuit in a chosen direction between the two voltages ***V₁*** and ***V₂***.

The inductor 34 may form part of an inductor component 36 which provides suitable mechanical housing of the inductor 34 itself as well as services such as cooling and measurements of local parameters such as temperature (T) and electrical current (C). These parameter measurements can then be supplied to the power train electronic control unit 26 for use in control of the switched mode power converter 24 or subcircuit 25 and wider aspects of the power train. For example, measurements of excessive temperature or rapid changes in current at the inductor 34 may be indicative of problems such as magnetic saturation of the inductor which can then be controlled by changing the timing signals to the MOSFETS or by shutting down the power converter altogether if necessary.

An electric vehicle may typically make use of several such power converters 24 and/or subcircuits 25, operating in parallel or in other configurations so as to increase the current or power capacity of the power electronics 22 and therefore also of the power train as a whole. For example, each of two or more such power converter subcircuits 25 may be used to provide a phase subcircuit 25 operating at a different electrical phase, for example with two such subcircuits 25 operating at 180 degree phase difference, or three such subcircuits 25 operating at 120 degree phase differences. Moreover, figure 2 illustrates just one possible way of constructing such a switched mode power converter 24 or power converter subcircuit 25, and many others will be known or apparent to the person skilled in the art.

Typically, however, in the context of the present disclosure, the described switched mode power converters 24 or subcircuits 25 each comprise one or more high power inductors 34 which are used to carry all or a significant fraction of the electrical power being transferred through the power converter which it serves, for example at least 20%, or at least 40% or at least 80% of the power being transferred. Such a high power inductor 34 may therefore be said to operate as the primary magnetic energy storage element of a switched mode power converter 24 or subcircuit 25 within which it is used, being configured to handle the primary energy transfer and conversion function within the switched-mode power supply.

For use in the described switched-mode power converter application in the power train of an electrically powered vehicle, it may be desirable for the current carrying capacity of the inductor to be very high, example at least 200 or at least 500 Amps, while achieving a low inductance value of, say, less than about 1000 or less than about 500 µH. The described switched mode power converters may typically switch at frequencies of a few 10's to a few 100's of kHz for example from about 25 kHz to about 500 kHz depending on design, and so in order to be reliable the inductor 34 must be able to withstand switching of the described large currents at these kinds of frequencies for long periods of time.

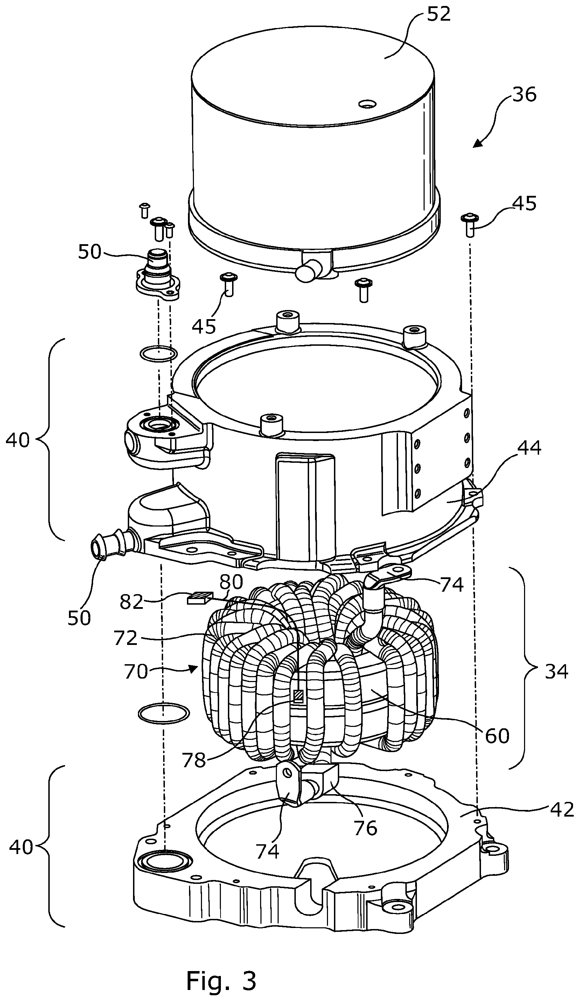

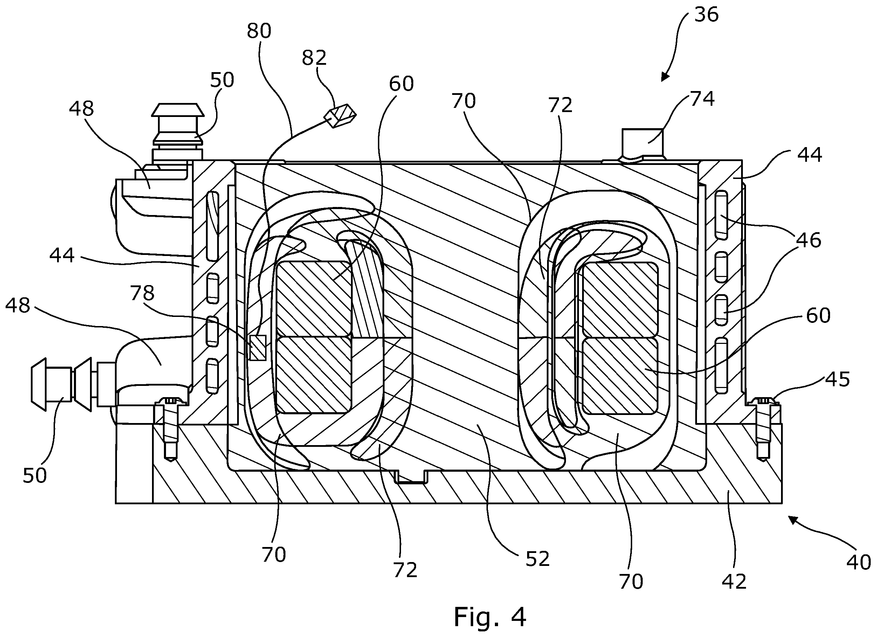

Figure 3 shows, in exploded perspective view, a first way in which the inductor component 36 may be constructed to achieve these aims, and figure 4 shows the same assembled inductor component 36 of figure 3 in cross sectional view. In particular, this inductor component comprises a housing 40 which in turn comprises a base 42 and at least one side wall 44 extending from the base. In the orientation show in the figures the at least one sidewall is shown extending upwardly from the base, but of course the inductor component could be used in a variety of attitudes for example with the base above the at least one side wall or disposed at other angles.

The inductor 34 is located largely or completely within the housing, disposed between or within the at least one side wall 44. The inductor 34 comprises at least an inductor core 60, and an inductor winding 70 comprising a winding conductor 72 wound onto the inductor core 60, the winding conductor terminating at each end in a winding terminal 74 for electrical connection into the wider switched mode power converter for example as illustrated in figure 2. In figures 3 and 4 the base is provided as a separate component to the at least one side wall, which are then coupled together during assembly as indicated in figure 3 for example using machine screws 45. However, the base and the at least one side wall could instead be fabricated as a single component for example by moulding, or by milling from a single piece of material.

In the arrangement of figure 3 the at least one side wall 44 is provided by a single essentially cylindrical sidewall (so largely circular in plan view), but other configurations may be used such as four side walls which together are essentially square or rectangular in plan view, side walls together forming a hexagon, and so forth. To achieve the above aims in terms of current carrying capacity and inductance the inductor component 36 is likely to be relatively large in physical size, for example with an external diameter of the housing measured between opposing external faces of the at least one side wall being least 15 or at least 20 cm, and/or an internal volume of the housing within which the winding and core are housed having a volume of at least 1500 or at least 3000 cm³.

Regardless of the size of the inductor component and the precise shape and configuration of the at least one sidewall and base, in order to achieve the required electrical performance, embodiments of the invention are provided with one or more cooling channels 46 which run through and within the at least one sidewall so that a cooling fluid can be circulated through the cooling channels 46 to cool the inductor component 36 and more particularly to cool the inductor 34 itself.

In the example of figures 3 and 4 a single cooling channel 46 is provided, configured helically through and within the at least one side wall, and encircling the inductor, to carry a cooling fluid between first and second cooling channel ports 48, to which spigots 50 are attached for connecting to an external cooling fluid circuit (not shown) using suitable hoses or similar. However, various other arrangements are possible such as the provision of two or more separate such cooling channels, connected to the cooling circuit by just two or more than two cooling channel ports and just two or more than two spigots or other fluid connection structures. By way of example, two helical cooling channels could be provided in double helical configuration, or a first manifold ring channel in an upper portion of the at least one side wall could be connected to a second manifold ring in a lower portion of the at least one side wall with multiple connection channels between them.

Although various options exist for implementing the one or more cooling channels 46 through and within the at least one sidewall 44, one favoured option is to cast the one or more side walls, preferably as a single component, in a material with good thermal conductivity such as a metal and conveniently in aluminium, with the cooling channels being formed through and within the one or more sidewalls as part of that casting. Of course multiple separate castings could be formed and joined together to provide the one or more sidewalls 44 using suitable fluid tight seals to ensure integrity of the one or more cooling channels. Other techniques for forming the one or more side walls include by machining from one or more pieces of material (such as pieces of a metal) such that the cooling channels are provided within and/or between the one or more machined pieces, and by use of 3D printing or other rapid prototyping techniques.

Although in figures 3 and 4 the one or more cooling channels are provided as channels within the one or more side walls 44, such cooling channels could also be provided within the base 42, either being continuous with the one or more of the cooling channels of the side walls, or being provided as separate cooling channels.

The cooling circuit used to supply the cooling channels with a suitable cooling fluid may for example be a water cooling circuit used to cool other components of the power train or wider vehicle. However, a variety of other cooling fluids could be used including both liquids and gases, such as a dielectric cooling fluid or the refrigerant itself in a direct refrigerant cooling arrangement.

The inductor core 60 may be formed in various ways, but typically may be of a toroidal or more generally of a ring or closed loop configuration. Commercially available ferromagnetic powder cores may be used, typically fabricated using one or more ferromagnetic materials compressed together with a binder material, to provide high magnetic permeability with low core losses due to hysteresis and eddy currents. To increase the volume of the inductor core 60, to thereby increase current carrying capacity before inductor saturation while using powder cores which are commercially readily available to minimize cost of construction, the inductor core 60 may comprise two or more separate powder core components, and in particular two or more toroidal powder core components, stacked together as shown in cross section in figure 4.

In order to achieve an appropriate level of inductance as discussed above, the number of turns of the winding conductor 72 on the inductor core 60 may be about from 10 to 40, or more typically about 20 to 30, and to achieve sufficient current carrying capacity within the design and thermal management arrangements described herein the winding conductor 72 may have a diameter of at least 10 mm, at least 20 mm, or more typically about 25 mm. In order to maintain a high current carrying capacity in such a thick winding conductor, the winding conductor may comprise or be formed of Litz wire, for example Litz wire having around 4500 interwoven strands. In some embodiments the Litz wire may have at least about 500 or about 1000 interwoven strands.

In order to provide a reliable inductor 34 capable of carrying the described large, rapidly switched currents over long periods of time without failure, the inductor conductor 72 and inductor winding may be constructed in particular ways. For example, if Litz wire is used for the winding conductor then typically each strand of the Litz wire may have an enamel coating. Whether formed of Litz wire or of another construction, the winding conductor may then be wrapped helically using an electrically insulating tape such as a Kapton tape, preferably with a significant partial overlap between turns for example a 10-30% overlap to reduce the likelihood of electrical shorting or sparking. Once the winding conductor 72 has been wound onto the inductor core 60 to form the inductor 34, this assembly may then be covered and impregnated, and preferably vacuum impregnated, with an electrically insulating varnish, for example a polyester varnish such as Dolphon CC-1105, to further protect against potential electrical breakdown over time.

The inductor 34, following one or more of the above construction and/or treatment techniques, is then disposed within the housing 40 (the base may be mounted to the side walls before or after this step), and the spaces between the inductor 34 and the housing are then filled with a suitable potting compound 52 such as a two part epoxy potting compound, and preferably such a potting compound with good thermal conductivity such as Damival E112. This filling process may be carried out using a pressure vacuum filling process to ensure that all gaps and spaces between the inductor 34 and the housing 40 are filled. The potting compound 52 is shown in figure 3 as a solid cylindrical block, i.e. in the shape it forms once set within the housing, rather than implying that it is a pre-formed component of this shape.

Before filling the housing with the potting compound 52, care is taken to ensure that terminals 74 of the inductor winding 70 remain exposed outside of the potting compound 52. For example, in figure 3 the winding conductor leading to a lower one of the winding terminals 74 is housed within a sealing block 76 which fits snugly within a corresponding slot in the base 42, while the upper terminal 74 remains above the upper finish level of the potting compound as seen in figure 4.

Careful construction of the inductor component 36 in this way helps to provide a component which is cooled more effectively using the one or more cooling channels in the side walls, and which is less prone to electrical breakdown under the high electrical power and rapid switching conditions of use.

In many embodiments it is important to be able to monitor the temperature of the inductor 34 which can be controlled through control of the switching signals to rebalance heat output between the inductor 34 and switching MOSFETS, and indeed to prevent overheating of the inductor and potential failure or unwanted shifts in the saturation point. The inventors have found that thermistor temperature sensors, which are typically constructed using metal oxides, tend to be affected by the very strong and high frequency magnetic fields generated by the inductor winding leading to a noisy output signal, so instead have implemented this temperature sensing using a resistance temperature detector (RTD) 78, and more particularly a platinum RTD such as a PT1000 sensor (which has a nominal resistance of about 1000 Ohms at 0°C).

In figure 3 the RTD 78 is shown as installed adjacent to the inductor winding 70 and winding conductor 72 at a location between the inductor core 60 and the side wall 44, but it could instead be installed adjacent to the winding conductor at a location on the inside of the core distant from the side wall, or in other locations, and in any case to be installed before the potting compound 52 is used to surround the inductor winding and core. One option is to bond the RTD to the inductor core or to the inductor winding. A signal lead 80 of the RTD extends to a connector 82 which is held in position so as to remain above the above the upper level of the potting compound 52 while it being filled and set around the inductor. The connector 82 can then be used for onward electrical connection to the power train electronic control unit 26 for use of the temperature signal in control of the switched-mode power converter.

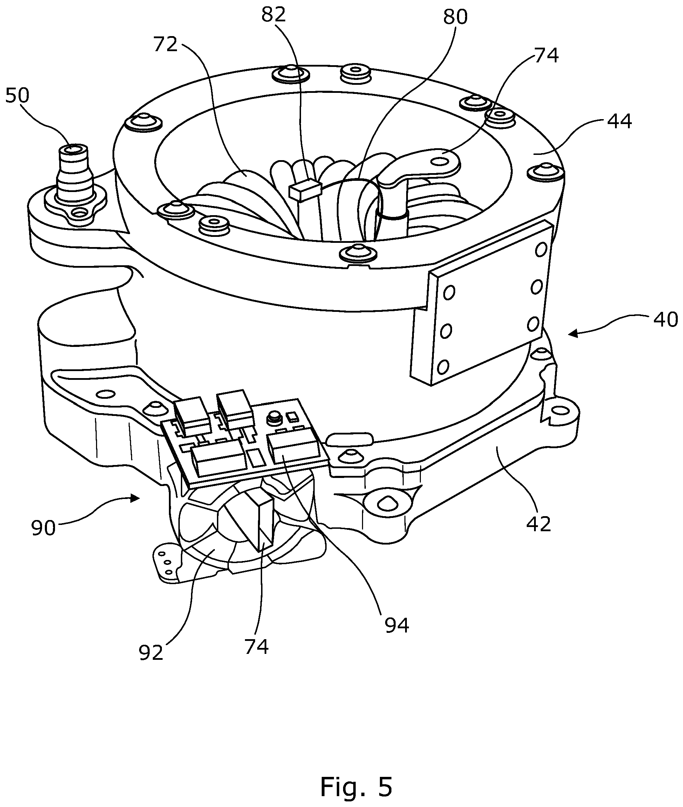

A perspective view of the assembled inductor component 36 of figures 3 and 4 is provided in figure 5. Figure 5 additionally illustrates the use of Hall effect current sensor unit 90 disposed outside the housing, and arranged to detect the electrical current flowing through the inductor winding 70 between the terminals 74. In the arrangement of figure 5, this is achieved by disposing a magnetic core 92 of the Hall effect current sensor 90 around the lower of the terminals 74, adjacent to the base 42 of the housing, but such a magnetic core or other suitable part of the sensor 90 could be disposed proximally to either terminal 74 or one or more other parts of the winding conductor 72 in various ways.

The Hall effect current sensor 90 unit may in particular comprise a low voltage power supply 94 which is galvanically isolated from the high voltages on the inductor winding 70 and elsewhere in the power converter 24 such as the input and output voltages V₁ and V₂ as illustrated in figure 2, and provide closed loop operation using the isolated power supply to deliver an output detected current signal ***C*** representative of the detected electrical current. The AC current signal ***C*** may then be passed to the power train electronic control unit 26 as shown in figure 2 for use in control of the switched-mode power converter 24 and wider power train as required.

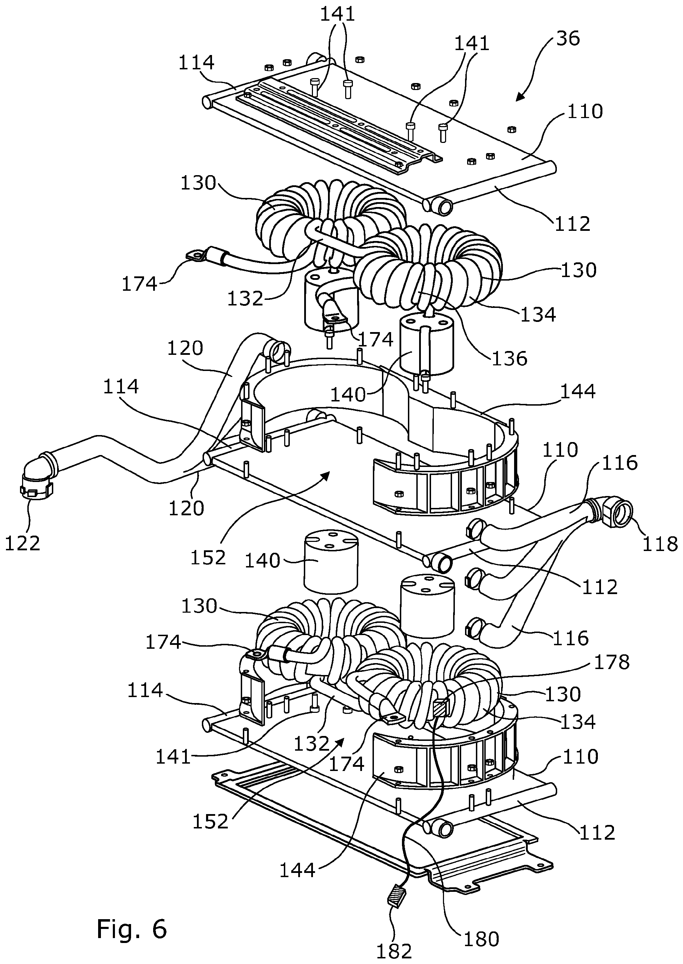

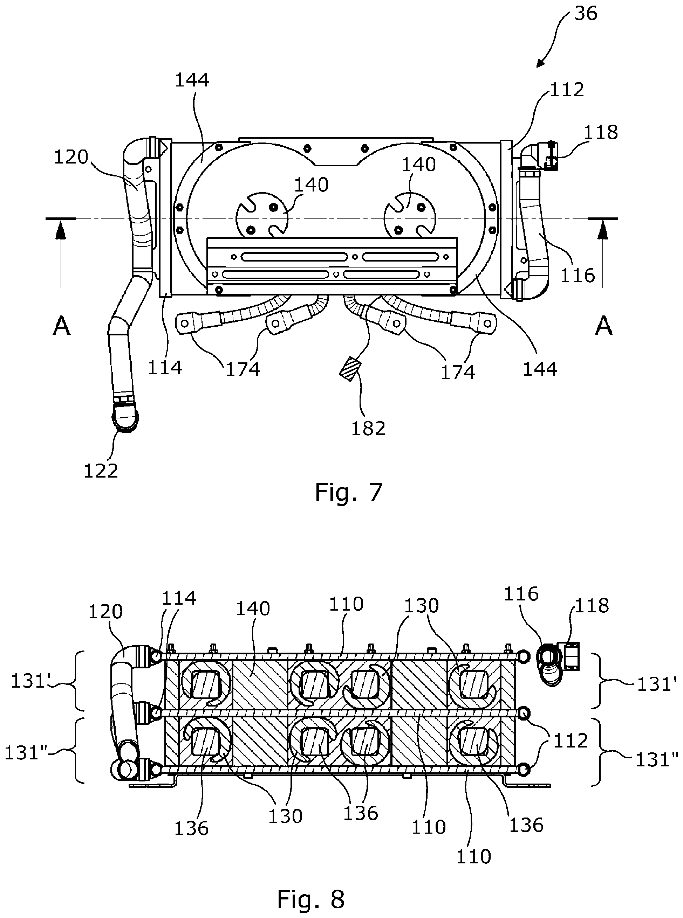

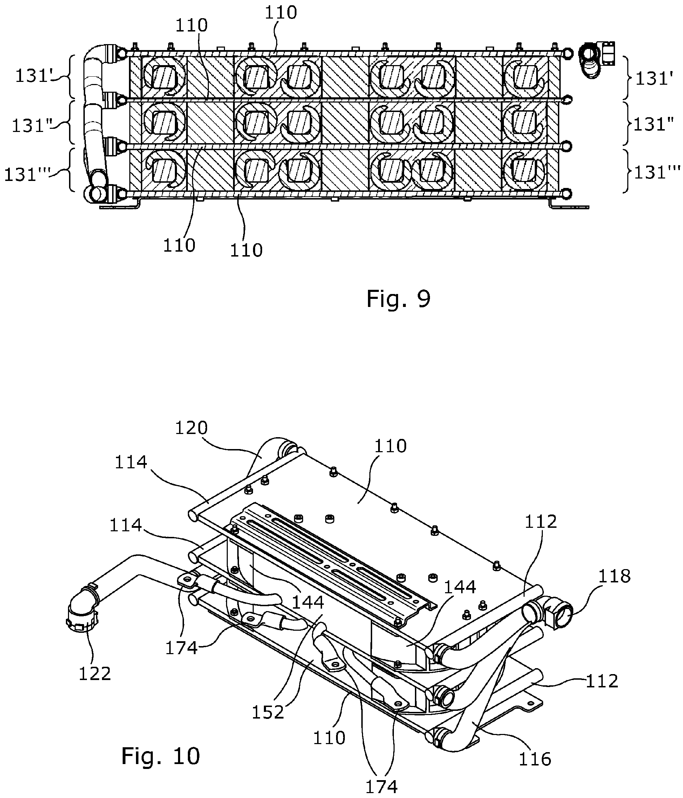

Figure 6 illustrates, in exploded perspective view, a second way in which the inductor component 36 may be constructed to achieve similar aims to those discussed above. Figure 7 then shows the same assembled inductor component in plan view, and figure 8 shows a cross section along the A-A in figure 7. Finally, figure 9 shows the same inductor component in perspective view.

In particular, this inductor component comprises at least three stacked cooling plates 110, each cooling plate comprising one or more cooling channels running within and through the plate (and not visible in these figures) for circulating a cooling fluid within or passing a cooling fluid through the cooling plate, so as to cool the inductor component 36 during operation of a switched-mode power converter 24 or other circuit within which it is used. The at least three cooling plates are stacked in the sense of being approximately or substantially coplanar, and in this example each cooling plate is of about the same size and shape in plan view, being rectangular in the example of figure 6.

Each cooling plate 110 comprises an inlet manifold 112 at one end, and an outlet manifold 114 at the other, opposing end of the cooling plate. The inlet manifolds are then fed the cooling fluid through suitable inlet hoses or pipes 116, typically from a single cooling fluid input coupling 118, and the outlet manifolds deliver cooling fluid through suitable outlet hoses or pipes 120, typically to a single cooling output coupling 122. The cooling fluid input and output couplings 118, 122 can then be coupled within a suitable external cooling fluid circuit (not shown).

As already described above in respect of figure 2, the cooling circuit used to supply the cooling plates 110 with a suitable cooling fluid may for example be a water cooling circuit which could also be used to cool other components of the power train or wider vehicle. However, a variety of other cooling fluids could be used including both liquids and gases, such as a dielectric cooling fluid or the refrigerant itself in a direct refrigerant cooling arrangement.

The cooling channels within the cooling plates may take various forms. For example each cooling plate 110 could define a single cooling channel, or multiple such channels, within its structure. Multiple channels could be used for example to ensure that all parts of each cooling plate are cooled effectively by the cooling fluid. In some examples, each cooling plate 110 may comprise fins extending internally from one or both major faces of the cooling plate to increase heat transfer from the major surfaces into the cooling fluid.

Between each adjacent pair of cooling plates is disposed a group of two or more inductor windings 130, with the inductor windings 130 of each group being connected to each other electrically in series as can be seen from the series link 132 between the two windings in each group. Each group of inductor windings 130 is the provided with a pair of electrical terminals 174, so that all of the inductor windings 130 of each group can be coupled together into a switched more power converter or other circuit as a single inductance. Each winding 130 may also be disposed substantially coplanar with the adjacent cooling plates 110, so that the multiple windings within each group are also disposed substantially coplanar with each other, as well as being proximal or adjacent to each other as shown in the figures.

Each of the inductor windings 130 comprises a winding conductor 134 wound onto an inductor core 136 (more clearly visible in the cross section of figure 8). In practice, all of the winding conductors 134 for each group of inductor windings, including the series links 132 between these, may be formed using a continuous length of winding conductor to avoid unnecessary and potentially unreliable joins between the multiple winding conductors of each group of indictor windings.

Similar to the arrangement of figures 3 to 5, here each inductor core 136 may be formed in various ways, but typically may ferromagnetic, and may be of a toroidal or more generally of a ring or closed loop configuration. Commercially available ferromagnetic powder cores may be used, typically fabricated using one or more ferromagnetic materials compressed together with a binder material, to provide high magnetic permeability with low core losses due to hysteresis and eddy currents. Although in figure 4 the inductor core is formed by stacking two such powder cores, this is not typically required in the arrangement of figures 6 to 9 where the height of each inductor winding is reduced compared to its diameter.

If each inductor winding is described as a toroidal inductor winding, comprising a winding conductor 134 wound onto a toroidal inductor core 136, then the above use of the term coplanar to describe how the inductor windings are positioned and oriented may refer to the major plane of each toroidal winding and/or core (within which the cross section of the torus is approximately defined by two concentric circles), and the major planes of the adjacent stacked cooling plates, in the manner which is clear from the figures. More generally however, each inductor winding may be described as having one or both of an outer circumference which lies midway between and approximately parallel to each of the adjacent cooling plates, and an axis of revolution which extends between and approximately perpendicularly to each of the adjacent cooling plates.

In order to provide robust and secure placement of the inductor windings 130, and improved structural robustness of the whole structure, a hub component 140 may be positioned within a central aperture of each inductor winding 130. Each such hub component may be approximately cylindrical (in the figure they are cylindrical with a pair of opposing, axially directed side wall slots), and may be positioned in contact with, and preferably fastened to, either or both the adjacent cooling plates for example using bolts or screws 141 as illustrated in figure 6. In this way, if each hub component 140 is sized around its circumference to fit snugly within the central aperture of each toroidal or similarly shaped inductor winding, then they can be effective to assist in limiting or preventing lateral movement of the inductor windings, that is in directions parallel to the cooling plates 110. Each hub component may also be sized axially (that is in the direction extending between adjacent cooling plates) to be slightly smaller than the corresponding height of the toroidal or similarly shaped inductor winding surrounding it. In this way, when the bolts or screws are tightened, the adjacent cooling plates are pulled together slightly to press onto the adjacent surfaces of the inductor windings, thereby limiting or preventing axial movement of the inductor windings. Each such hub component 140 could be made of nylon or some other plastics or electrically insulating material, but should not be metallic or electrically conductive so as to avoid the induction of eddy currents and similar effects.

Each group of inductor windings may also be at least partly surrounded by at least one side wall 144 disposed between each adjacent pair of the stacked cooling plates. These side walls may also improve the robustness of the inductor component, while protecting the inductor windings, and providing a partly closed spaced within which a thermally conductive potting compound may be added around the inductor components, in a manner similar to that discussed above in respect of figure 3.

The inductor component 36 when constructed as illustrated in figure 6 and discussed above has various advantages. Because each group of inductor windings comprises multiple adjacent or proximal inductor windings which are in electrical series with each other, and which are coplanar with both adjacent cooling plates, a distance between the cooling plates is reduced for a given inductance and current capacity, so thermal coupling to the cooling fluid and therefore thermal performance is improved. This is particularly the case where each inductor winding is toroidal and the major plane of each torus is coplanar with the adjacent cooling plates, and also particularly the case when each inductor winding has an external diameter which is large compared to the spacing between the adjacent cooling plates. For example, as illustrated in figure 6, each inductor winding may have an external diameter which is at least twice, and optionally at least three times the distance or spacing between the adjacent cooling plates.

Similarly to the arrangement of figures 3 to 5, in order to achieve an appropriate level of inductance, for example less than about the number 500 µH and optionally around 50 µH for each inductor winding, the number of turns of winding conductor 134 on each inductor core 136 may be about from 10 to 40, or more typically about 20 to 30, although generally speaking to achieve similar levels of inductance, the arrangement of figure 6 using multiple inductor windings per group may require fewer turns per inductor core than that required for the single inductor winding of figure 3.

Again similarly to the arrangement of figures 3 to 5, to achieve sufficient current carrying capacity, each winding conductor 134 may have a somewhat smaller diameter than in that earlier arrangement, for example of at least 6 mm, or least 12 mm. In order to maintain a high current carrying capacity in such a thick winding conductor, the winding conductor may again comprise or be formed of Litz wire, for example Litz wire having about 3600 interwoven strands (so about a 20% reduction compared with the 4500 strands which might be used in the embodiment of figure 3), or at least about 500 or at least about 1000 interwoven strands.

Again, similar to the arrangement of figures 3 to 5, in order to provide a reliable inductor component 36 capable of carrying the described large, rapidly switched currents over long periods of time without failure, each winding conductor 134, and inductor winding 130 onto an inductor core 136, may be constructed in particular ways. For example, if Litz wire is used for the winding conductors then typically each strand of the Litz wire may have an enamel coating. Whether formed of Litz wire or of another construction, each winding conductor may then be wrapped helically using an electrically insulating tape such as a Kapton tape, preferably with a significant partial overlap between turns for example a 10-30% overlap to reduce the likelihood of electrical shorting or sparking. Once the winding conductors 134 have been wound onto the inductor cores 136 to form a respective group of inductor windings 130 (typically using a continuous single length of winding conductor 134 as mentioned above), this assembly may then be covered and impregnated, and preferably vacuum impregnated, with an electrically insulating varnish, for example a polyester varnish such as Dolphon CC-1105, to further protect against potential electrical breakdown over time.

Each group of inductor windings 130, following one or more of the above construction and/or treatment techniques, is then disposed between a different pair of adjacent cooling plates as illustrated in figure 6 (side walls 144 may be added before or after this step), and the spaces between the inductor windings 130 and the adjacent cooling plates and side walls are then filled with a suitable potting compound 152 (not illustrated explicitly in figure 6 but general position shown by arrows 152) such as a two part epoxy potting compound, and preferably such a potting compound with good thermal conductivity such as Damival E112. This filling process may be carried out using a pressure vacuum filling process to ensure that all gaps and spaces between the inductor windings 130 and the cooling plates 110 and side walls 144 are filled.

Before filling the spaces around the inductor windings 130 with the potting compound 152, care should be taken to ensure that the terminals 174 of each group of inductor windings 130 are positioned to remain exposed outside of the potting compound 152 so that suitable electrical connections can readily be made.

Careful construction of the inductor component 36 in this way helps to provide a component which is cooled more effectively using the cooling plates, and which is less prone to electrical breakdown under the high electrical power and rapid switching conditions of use.

For the same reasons as discussed above in respect of figures 2 to 5, one or more temperatures within the inductor component 36 of figure 6 may be monitored using corresponding one or more resistance temperature detectors (RTD) 178, and more particularly a platinum RTD such as a PT1000 sensor (which has a nominal resistance of about 1000 Ohms at 0°C).

In figure 6 the RTD 178 is shown as installed adjacent to one of the inductor windings 130 and winding conductors 134 at a location between the corresponding inductor core 136 and the adjacent side wall 144, but it could instead be installed adjacent to a winding conductor at a location on the inside of the core distant from the side wall, or in other locations, and in any case to be installed before the potting compound 152 is used to surround the inductor winding and core. One option is to bond the RTD to the inductor core or to the inductor winding. As in figure 3, a signal lead 180 of the RTD extends to a connector 182 which is held in position so as to remain outside the potting compound 152 while it being filled and set around the inductor windings 130. The connector 182 can then be used for onward electrical connection to the power train electronic control unit 26 of figure 2 for use of the temperature signal in control of the switched-mode power converter.

Figure 7 provides a plan view looking down on the inductor component 36 of figure 6, but with the uppermost cooling plate 110 removed for clarity, and the upper group of inductor windings no longer visible due to the surrounding potting compound 152 removed for clarity. Figure 8 then shows the cross section A-A of figure 7. In this figure 8 it can be seen clearly that the inductor windings of each group 131', 131" (on each level between a pair of adjacent cooling plates) are both coplanar with each other, especially in the sense of the major plane of a toroidal form of each inductor winding, and coplanar with the adjacent cooling plates. Furthermore, the major diameter of each winding is about 3.2 times the spacing between each plate (so at least twice or at least three times this spacing) thereby promoting heat conduction from the inductor windings to the cooling plates.

Note that in practical embodiments operating at typical electrical currents and frequencies mentioned above, the heat generated in the inductor may be generated in the inductor cores and in the inductor windings in approximately equal amounts, so that the illustrated close spacing between the cooling plates by means of two or more lower profile inductor windings per group is beneficial in this respect.

Although in figures 6 and 7 two adjacent lower profile inductor windings are provided in electrical series to provide a group of inductor windings between each adjacent pair of cooling plates, three or more such electrically series inductor windings could be used in each group, again connected to provide a single effective inductance between two external electrical terminals. These may be disposed in various configurations between each pair of cooling plates, for example with three of four such inductor windings disposed in a row, a triangle or a square relationship. Furthermore, although in figures 6 and 7 only two groups of inductor windings are shown, each group being disposed between a different pair of adjacent cooling plates, by providing a stack of four or more cooling plates, three or more such distinct groups maybe provided. As already discussed in respect of figure 2.

By way of example, figure 9 shows a cross section through an inductor component similar to that of figure 8, but in which each group of inductor windings 131', 131", 131", comprises three coplanar inductor windings in electrical series (so each group is provided with two external terminals, not shown in this figure) and there are three such groups 131', 131", 131‴ disposed between adjacent pairs of four cooling plates 110. Whether two, three or more such groups of inductor windings are used, conveniently each such group may be used to provide an inductance 34 for power conversion at a different electrical phase of a power converter using these inductances. In particular, if a power converter has a plurality of phase subcircuits each operating at a different electrical phase, then each group of inductor windings may be used as an inductance for a different one of these subcircuits.

The circuit illustrated in figure 2 could for example be one such subcircuit acting at a first electrical phase, and the differences in electrical phase between the two or more subcircuits could be 180 degrees for two such subcircuits, 120 degrees for three such subcircuits, etc. In this way, the inductor component 36 of figures 6 to 11 may provide a compact and robust inductor component for a switched mode power converter operating at multiple electrical phases simultaneously.

A perspective view of the assembled inductor component 36 of figures 6, 7 and 8 is provided in figure 10. Although not shown in figure 10, as for figure 5 this assembled inductor component may additionally comprise one or more Hall effect current sensor units 90 disposed externally to the side walls 144 and potting compound 152, and arranged to detect the electrical current flowing through a respective one or more of the groups of inductor windings 130 between the respective external terminals 174. As for the arrangement of figure 5, this can be achieved by disposing a magnetic core 92 of the or each Hall effect current sensor 90 around one of the terminals 174 or winding conductor approaching the terminal 174 of the respective group of inductor windings, or proximally to one of the terminals 174 or one or more other parts of the respective winding conductor 134 in various other ways.

As already described above, the or each Hall effect current sensor 90 unit may in particular comprise a low voltage power supply 94 which is galvanically isolated from the high voltages on the respective group of inductor windings 130 and elsewhere in the power converter 24 such as the input and output voltages V₁ and V₂ as illustrated in figure 2, and provide closed loop operation using the isolated power supply to deliver an output detected current signal C representative of the detected electrical current. The AC current signal C may then be passed to the power train electronic control unit 26 as shown in figure 2 for use in control of the switched-mode power converter 24 and wider power train as required.

Although particular embodiments of the invention have been described, the skilled person will appreciate that a number of modifications may be made to these without departing from the scope of the invention as claimed.

The invention also provides aspects as set out in the following numbered clauses:
Clause 1. An inductor component for use in a switched-mode power converter of a power train of an electrically powered vehicle, the inductor component comprising:
   a housing which comprises a base, at least one side wall extending from the base, and one or more cooling channels running within the at least one side wall, the one or more cooling channels being arranged for circulating a cooling fluid within the at least one sidewall so as to cool the inductor component during operation of the power converter;
   an inductor core disposed within the housing; and
   an inductor winding comprising a winding conductor wound onto the inductor core.
Clause 2. The inductor component of clause 1 wherein the at least one side wall is provided as a metal casting comprising the one or more cooling channels within the casting.
Clause 3. The inductor component of clause 1 wherein the at least one side wall is machined from one or more pieces of material so as to comprise the one or more cooling channels within the machined material.
Clause 4. The inductor component of any of clauses 1 to 3 wherein each of the one or more cooling channels is configured helically around the inductor core and winding.
Clause 5. The inductor component of any preceding clause wherein the inductor core comprises two or more toroidal powder cores stacked together.
Clause 6. The inductor component of any preceding clause wherein the inductor winding is electrically coupled to terminals provided externally to the housing, and the inductor component comprises a Hall effect current sensor unit also disposed outside of the housing and arranged to detect the electrical current flowing through the inductor winding between the terminals.
Clause 7. An inductor component for use in a switched-mode power converter of a power train of an electrically powered vehicle, the inductor component comprising:
   at least three stacked cooling plates, each cooling plate comprising one or more cooling channels running within the cooling plate for passing a cooling fluid through the cooling plate, so as to cool the inductor component during operation of the power converter;
   a plurality of inductor cores;
   for each adjacent pair of the stacked cooling plates, providing a group of coplanar, and electrically in series, toroidal inductor windings disposed between, and coplanar to, the adjacent pair of the stacked cooling plates, each toroidal inductor winding comprising a winding conductor wound onto a different one of the inductor cores; and
   optionally at least one side wall disposed between each adjacent pair of the stacked cooling plates, so as to at least partly surround the corresponding group of coplanar toroidal inductor windings.
Clause 8. The inductor component of clause 7 wherein each toroidal inductor winding has an external diameter which is at least twice the length of the distance between the adjacent cooling plates.
Clause 9. The inductor component of clause 7 or 8 further comprising, for each inductor winding, a hub component extending through a central aperture of the inductor winding between the respective adjacent cooling plates.
Clause 10. The inductor component of any of clauses 7 to 9 comprising a group of either two or three toroidal inductor windings between each adjacent pair of the stacked cooling plates, and/or either three or four stacked cooling plates respectively defining either two or three adjacent pairs of the stacked cooling plates.
Clause 11. The inductor component of any of clauses 7 to 10 wherein each cooling plate comprises an inlet and an outlet manifold at opposing ends of the cooling plate for respective inlet and outlet of the cooling fluid into and out of the cooling plates.
Clause 12. The inductor component of any of clauses 7 to 11 further comprising a pair of external terminals for each group of inductor windings, and the inductor component comprises at least one Hall effect current sensor unit arranged to detect the electrical current flowing through a corresponding at least one of the groups of inductor windings between the external terminals for that group.
Clause 13. The inductor component of clause 6 or 12 where the Hall effect current sensor unit comprises an isolated power supply and provides closed loop operation using the isolated power supply to deliver an output detected current signal representative of the detected electrical current.
Clause 14. The inductor component of any preceding clause wherein the or each, inductor winding comprises from 10 to 40 turns of the winding conductor around the respective inductor core.
Clause 15. The inductor component of any preceding clause wherein the or each, winding conductor comprises Litz wire and/or has a diameter of at least 7 mm, or of at least 10 mm.
Clause 16. The inductor component of any preceding clause wherein the or each, winding conductor is wrapped in partially overlapping turns of insulating tape before winding onto the respective inductor core.
Clause 17. The inductor component of clause 16 wherein the or each, wrapped winding conductor wound on the respective inductor core is impregnated with insulating varnish.
Clause 18. The inductor component of any preceding clause wherein the space between the or each at least one side wall and the respective inductor winding(s) and inductor core(s) is filled with a thermally conductive potting compound.
Clause 19. The inductor component of any preceding clause further comprising a resistance temperature detector, RTD, for monitoring the temperature of a said inductor winding, the RTD being located adjacent to the said inductor winding and/or inductor core, optionally where the RTD is a PT1000 sensor.
Clause 20. Apparatus comprising a switched-mode power converter comprising the inductor component of any of clauses 6, 12, 13 or 19, the apparatus further comprising a control system arranged to operate the power converter responsive to the monitored temperature and/or the detected electrical current.
Clause 21. The inductor component of any preceding clause wherein an external diameter of the housing measured between opposing external faces of the at least one sidewall is at least 20 cm, and/or an internal volume of the housing within which the winding and core are housed has a volume of at least 3000 cm³.
Clause 22. The inductor component of any preceding clause wherein the inductor component has an inductance of no more than 500 microHenry and/or a current rating of at least 500 Amps.
Clause 23. A switched-mode power converter for use in a power train of an electrically powered vehicle, comprising the inductor component of any preceding clause.
Clause 24. A switched-mode power converter for use in a power train of an electrically powered vehicle, comprising the inductor component of clause 7, or the inductor component of any of clauses 8 to 22 when dependent on clause 7, the power converter having a plurality of phase subcircuits each operating at a different electrical phase, wherein each group of coplanar, and electrically in series, toroidal inductor windings forms part of a different one of the phase subcircuits.
Clause 25. The switched-mode power converter of clause 23 or 24 wherein the switched-mode power converter is DC-DC power converter optionally arranged to convert between a higher battery voltage and a lower voltage for input to a DC-AC inverter.
Clause 26. An electrically powered vehicle comprising:
   an electric motor for propelling the vehicle;
   a battery providing motive electrical power for the electric motor; and
   a power train coupling the motive electrical power between the battery and the electric motor,
   wherein the power train comprises the switched mode power converter of any of clauses 23 to 25 arranged to convert at least a portion of the motive electrical power.
Clause 27. A method of constructing an inductor component for use in a switched-mode power converter of a power train of an electrically powered vehicle, the method comprising:
   providing a housing, the housing comprising a base, at least one side wall extending from the base, and one or more cooling channels running within the at least one side wall, the one or more cooling channels being arranged for circulating a cooling fluid within the at least one sidewall so as to cool the inductor component during operation of the power converter;
   providing an inductor core;
   winding a winding conductor onto the inductor core to form an inductor winding; and
   installing the inductor winding and inductor core into the housing.
Clause 28. A method of constructing an inductor component for use in a switched-mode power converter of a power train of an electrically powered vehicle, the method comprising:
   providing at least three stacked cooling plates, each cooling plate comprising one or more cooling channels running within the cooling plate for circulating a cooling fluid within the cooling plate, so as to cool the inductor component during operation of the power converter;
   providing a plurality of inductor cores, and winding a winding conductor onto each said inductor core to form a respective inductor winding such that, for each of a plurality of groups of said inductor windings, the inductor windings of that group are connected in electrical series; and
   installing each group of inductor windings between a different adjacent pair of the stacked cooling plates.
Clause 29. The method of clause 27 or 28 further comprising wrapping partially overlapping turns of insulating tape onto the or each winding conductor and then impregnating the or each wrapped winding conductor with an electrically insulating varnish before installing the or each inductor winding.
Clause 30. The method of any of clauses 27 to 29 further comprising, following installing the or each inductor winding into the housing or between adjacent cooling plates, potting the inductor winding into the housing or between adjacent cooling plates within a thermally conductive potting compound.
Clause 31. The method of clause 30 further comprising, before potting the or each inductor winding within a thermally conductive potting compound, installing a resistance temperature detector, RTD, adjacent to the or at least one of the inductor winding(s), such that that an electrical lead of the RTD subsequently emerges from the potting compound for electrical connection to the RTD.

## Claims

1. An inductor component for use in a switched-mode power converter of a power train of an electrically powered vehicle, the inductor component comprising:
at least three stacked cooling plates, each cooling plate comprising one or more cooling channels running within the cooling plate for passing a cooling fluid through the cooling plate, so as to cool the inductor component during operation of the power converter;
a plurality of inductor cores;
for each adjacent pair of the stacked cooling plates, providing a group of coplanar, and electrically in series, toroidal inductor windings disposed between, and coplanar to, the adjacent pair of the stacked cooling plates, each toroidal inductor winding comprising a winding conductor wound onto a different one of the inductor cores; and
optionally at least one side wall disposed between each adjacent pair of the stacked cooling plates, so as to at least partly surround the corresponding group of coplanar toroidal inductor windings.

2. The inductor component of claim 1 wherein each toroidal inductor winding has an external diameter which is at least twice the length of the distance between the adjacent cooling plates.

3. The inductor component of claim 1 or 2 further comprising, for each inductor winding, a hub component extending through a central aperture of the inductor winding between the respective adjacent cooling plates.

4. The inductor component of any of claims 1 to 3 comprising a group of either two or three toroidal inductor windings between each adjacent pair of the stacked cooling plates, and/or either three or four stacked cooling plates respectively defining either two or three adjacent pairs of the stacked cooling plates.

5. The inductor component of any preceding claim wherein each cooling plate comprises an inlet manifold and an outlet manifold at opposing ends of the cooling plate for respective inlet and outlet of the cooling fluid into and out of the cooling plates.

6. The inductor component of any preceding claim further comprising a pair of external terminals for each group of inductor windings, and the inductor component comprises at least one Hall effect current sensor unit arranged to detect the electrical current flowing through a corresponding at least one of the groups of inductor windings between the external terminals for that group,
optionally wherein the Hall effect current sensor unit comprises an isolated power supply and provides closed loop operation using the isolated power supply to deliver an output detected current signal representative of the detected electrical current.

7. The inductor component of any preceding claim wherein one or more of:
each inductor winding comprises from 10 to 40 turns of the winding conductor around the respective inductor core;
each winding conductor comprises Litz wire and/or has a diameter of at least 7 mm; and
each group of inductor windings has an inductance of no more than 500 microHenry and/or a current rating of at least 500 Amps.

8. The inductor component of any preceding claim wherein one of more of:
each winding conductor is wrapped in partially overlapping turns of insulating tape before winding onto the respective inductor core;
each wrapped winding conductor wound on the respective inductor core is impregnated with insulating varnish; and
the space between each at least one side wall and the respective inductor winding(s) and inductor core(s) is filled with a thermally conductive potting compound.

9. The inductor component of any preceding claim further comprising a resistance temperature detector, RTD, for monitoring the temperature of a said inductor winding, the RTD being located adjacent to the said inductor winding and/or associated inductor core, optionally where the RTD is a PT1000 sensor.

10. Apparatus comprising a switched-mode power converter comprising the inductor component of either claim 6 or 9, the apparatus further comprising a control system arranged to operate the power converter responsive to the monitored temperature and/or the detected electrical current.

11. A switched-mode power converter for use in a power train of an electrically powered vehicle, the switched-mode power converter comprising the inductor component of any of claims 1 to 9, wherein optionally one or more of:
the power converter comprises a plurality of phase subcircuits each operating at a different electrical phase, wherein each group of coplanar, and electrically in series, toroidal inductor windings forms part of a different one of the phase subcircuits; and
the switched-mode power converter is DC-DC power converter is arranged to convert between a higher battery voltage and a lower voltage for input to a DC-AC inverter.

12. An electrically powered vehicle comprising:
an electric motor for propelling the vehicle;
a battery providing motive electrical power for the electric motor; and
a power train coupling the motive electrical power between the battery and the electric motor,
wherein the power train comprises the switched mode power converter of claim 11 arranged to convert at least a portion of the motive electrical power.

13. A method of constructing an inductor component for use in a switched-mode power converter of a power train of an electrically powered vehicle, the method comprising:
providing at least three stacked cooling plates, each cooling plate comprising one or more cooling channels running within the cooling plate for circulating a cooling fluid within the cooling plate, so as to cool the inductor component during operation of the power converter;
providing a plurality of inductor cores, and winding a winding conductor onto each said inductor core to form a respective inductor winding such that, for each of a plurality of groups of said inductor windings, the inductor windings of that group are connected in electrical series; and
installing each group of inductor windings between a different adjacent pair of the stacked cooling plates.

14. The method of claim 13 further comprising wrapping partially overlapping turns of insulating tape onto each winding conductor and then impregnating each wrapped winding conductor with an electrically insulating varnish before installing each inductor winding.

15. The method of claim 13 or 14 further comprising, following installing each inductor winding between adjacent cooling plates, potting the inductor winding between the adjacent cooling plates within a thermally conductive potting compound,
and optionally further comprising, before potting each inductor winding within a thermally conductive potting compound, installing a resistance temperature detector, RTD, adjacent to at least one of the inductor windings, such that that an electrical lead of the RTD subsequently emerges from the potting compound for electrical connection to the RTD.
